# FASCICULE DE BREVET EUROPEEN

(11) **EP 0 721 857 B1**
(45) Date de publication et mention de la délivrance du brevet: **20.05.1998**
(21) Numéro de dépôt: 96400022.8
(22) Date de dépôt: 04.01.1996
(51) Int. Cl.: B60N 3/08, B60R 7/06

(54) **Dispositif de rangement d'objets notamment pour véhicule automobile**
Vorrichtung zum Aufbewahren von Gegenständen, insbesondere in Kraftfahrzeugen
Device for storing objects, in particular in motor vehicles

(30) Priorité: 10.01.1995 FR 9500216
(43) Date de publication de la demande: 17.07.1996
(73) Titulaire: ECIA - EQUIPEMENTS ET COMPOSANTS POUR L'INDUSTRIE AUTOMOBILE, F-25400 Audincourt (FR)
(72) Inventeur: Basset, Laurent, F-90000 Belfort (FR)
(74) Mandataire: Habasque, Etienne Joel Jean-François

(56) Documents cités:
- EP-A- 0 337 157
- DE-A- 3 842 736
- DE-B- 2 412 451
- GB-A- 1 148 694
- GB-A- 2 247 654
- US-A- 4 462 630

## Description

La présente invention concerne un dispositif de rangement d'objets notamment pour véhicule automobile.

On connait déjà dans l'état de la technique, des dispositifs de rangement de ce type qui comprennent un boîtier de réception des objets, présentant une ouverture obturée par un couvercle articulé sur le boîtier et déplaçable par basculement par exemple par un utilisateur entre une position active, de fermeture du boîtier et une position escamotée, d'ouverture de celui-ci.

En règle générale, le couvercle est articulé dans la partie supérieure ou dans la partie inférieure du boîtier pour être déplaçable vers une position escamotée permettant à l'utilisateur d'avoir accès aux objets déposés dans le boîtier.

Cependant, on conçoit qu'un certain désordre peut régner dans ces boîtiers et que ceux-ci peuvent présenter une profondeur relativement importante, de sorte que l'accès aux objets est alors relativement difficile.

Le but de l'invention est donc de résoudre ces problèmes.

A cet effet, l'invention a pour objet un dispositif de rangement d'objets notamment pour véhicule automobile, du type comportant un boîtier de réception des objets, présentant une ouverture obturée par un couvercle articulé sur le boîtier et déplaçable entre une position active de fermeture du boîtier et une position escamotée d'ouverture de celui-ci, caractérisé en ce que le couvercle est déplaçable dans le boîtier et en ce que la face du couvercle dirigée vers le boîtier se présente sous la forme d'un godet muni d'un bord formant racloir adapté pour coopérer avec la paroi interne du boîtier lors du déplacement du couvercle de sa position active vers sa position escamotée, pour transférer les objets du boîtier dans le godet afin de les présenter de manière accessible dans celui-ci.

Avantageusement, le couvercle comporte des flasques latéraux munis de moyens d'articulation adaptés pour coopérer avec des moyens complémentaires du boîtier.

L'invention sera mieux comprise à la lecture de la description qui va suivre, donnée uniquement à titre d'exemple et faite en se référant aux dessins annexés, sur lesquels :
- la Fig.1 représente une vue en perspective d'un dispositif de rangement d'objets selon l'invention; et
- les Figs. 2 et 3 représentent des vues en coupe d'un dispositif de rangement selon l'invention, illustrant un couvercle de celui-ci respectivement en positions active de fermeture et escamotée d'ouverture d'un boîtier de ce dispositif.

Ainsi qu'on peut le voir sur ces figures, un dispositif de rangement d'objets selon l'invention est destiné à être intégré par exemple dans une pièce d'équipement telle qu'une planche de bord d'un véhicule automobile.

Ce dispositif de rangement comporte de manière classique un boîtier 1 de réception des objets, présentant une ouverture 2 obturée par un couvercle 3 articulé sur le boîtier 1 et déplaçable entre une position active de fermeture du boîtier et une position escamotée d'ouverture de celui-ci.

Selon l'invention, le couvercle 3 est déplaçable dans le boîtier 1 et la face du couvercle 3 dirigée vers le boîtier se présente sous la forme d'un godet muni d'un bord 4 formant racloir adapté pour coopérer avec la paroi interne 5 du boîtier 1 lors du déplacement du couvercle de sa position active vers sa position escamotée, pour transférer les objets du boîtier dans le godet afin de les présenter de manière accessible dans celui-ci.

Au moins une portion inférieure de la paroi interne du boîtier 1 est en arc de cercle centré sur l'axe d'articulation du couvercle sur le boîtier.

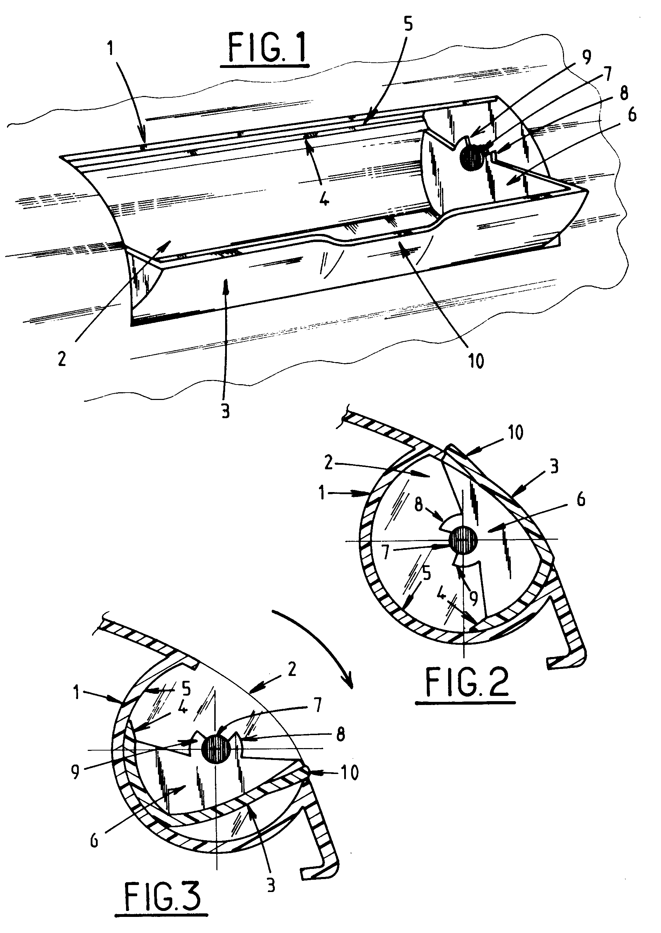

On conçoit alors comme cela est illustré sur les figures 2 et 3, que lors des déplacements du couvercle de sa position active de fermeture du boîtier, illustrée sur la figure 2, vers sa position escamotée d'ouverture de celui-ci, illustrée sur la figure 3, le bord formant racloir 4 du couvercle 3 permet de ramasser les objets contenus dans le boîtier 1 et de faire passer ceux-ci de ce boîtier dans le godet formé sur la face correspondante du couvercle, pour les présenter à l'utilisateur lorsque ce couvercle est dans la position escamotée d'ouverture du boîtier.

De préférence, ce couvercle est muni de flasques latéraux dont seul un, désigné par la référence 6, est visible sur ces figures, ces flasques latéraux étant munis de moyens d'articulation adaptés pour coopérer avec des moyens complémentaires du boîtier pour permettre les déplacements du couvercle.

Dans l'exemple de réalisation représenté, ces moyens d'articulation comprennent chacun un pion solidaire du boîtier et désigné par la référence générale 7, tandis que les moyens complémentaires des flasques du couvercle sont formés chacun par deux branches désignées par les références 8 et 9 sur ces figures et adaptées pour s'engager de part et d'autre de ce pion 7, pour assurer une fixation articulée du couvercle dans le boîtier.

Il va de soi bien entendu que d'autres moyens de fixation et d'articulation du couvercle sur le boîtier peuvent être envisagés.

Il va de soi également que différents modes de réalisation du couvercle en forme de godet peuvent être envisagés.

Celui-ci peut également être muni de moyens de manipulation par un utilisateur désignés par exemple par la référence 10 sur ces figures et le couvercle et le boîtier peuvent comporter des moyens de butée complémentaires adaptés pour délimiter les positions active et escamotée de ce couvercle de façon classique.

On conçoit alors qu'en position escamotée du couvercle, les objets sont contenus dans le godet de celui-ci et que ceux-ci sont présentés de manière extrêmement accessible à l'utilisateur.

Lors de la fermeture du couvercle, les objets sont replacés dans le boîtier.

On notera également que ce dispositif peut être intégré dans différentes pièces d'équipement d'un véhicule, telles que par exemple la planche de bord, les portières, les accoudoirs de siège, etc...

Il va de soi également que le boîtier peut présenter une paroi interne entièrement en arc de cercle centré sur l'axe des moyens de fixation du couvercle sur le boîtier et que le couvercle peut être déplaçable entre ses positions active et escamotée par basculement vers le bas comme cela est illustré sur les figures ou vers le haut, le couvercle étant alors inversé par rapport à l'exemple illustré.

## Revendications

1. Dispositif de rangement d'objets notamment pour véhicule automobile, du type comportant un boîtier (1) de réception des objets, présentant une ouverture (2) obturée par un couvercle (3) articulé sur le boîtier (1) et déplaçable entre une position active de fermeture du boîtier et une position escamotée d'ouverture de celui-ci, caractérisé en ce que le couvercle (3) est déplaçable dans le boîtier (1) et en ce que la face du couvercle (3) dirigée vers le boîtier se présente sous la forme d'un godet muni d'un bord formant racloir (4) adapté pour coopérer avec la paroi interne (5) du boîtier lors du déplacement du couvercle de sa position active vers sa position escamotée, pour transférer les objets du boîtier (1) dans le godet afin de les présenter de manière accessible dans celui-ci.

2. Dispositif selon la revendication 1, caractérisé en ce que le couvercle (3) comporte des flasques latéraux (6) munis de moyens d'articulation (8,9) adaptés pour coopérer avec des moyens complémentaires (7) du boîtier.

3. Dispositif selon la revendication 1 ou 2, caractérisé en ce qu'au moins une portion inférieure de la paroi interne du boîtier (1) est en arc de cercle centré sur l'axe d'articulation du couvercle (3) dans celui-ci.

## Claims

1. Device for storing objects, particularly in motor vehicles, of the type comprising a casing (1) for receiving the objects which has an opening (2) closed off by a cover (3) articulated to the casing (1) and moveable between an active position for closing the casing and a retracted position for opening the casing, characterised in that the cover (3) is moveable in the casing (1) and in that the face of the cover (3) directed to the casing is in the form of a scoop provided with an edge forming a blade (4) adapted to co-operate with the internal wall (5) of the casing when the cover is moved from its active position to its retracted position, in order to transfer the objects from the casing (1) into the scoop in order to present them therein in an accessible manner.

2. Device according to Claim 1, characterised in that the cover (3) comprises lateral end plates (6) provided with means of articulation (8, 9) adapted to co-operate with complementary means (7) on the casing.

3. Device according to Claim 1 or Claim 2, characterised in that at least a lower portion of the internal wall of the casing (1) is in the form of an arc of a circle centred on the axis of articulation of the cover (3) to the casing.

## Patentansprüche

1. Vorrichtung zum Aufbewahren von Gegenständen, insbesondere in Kraftfahrzeugen, bestehend aus einem Gehäuse (1) für die Aufnahme der Gegenstände, das eine Öffnung (2) aufweist, die durch einen Deckel (3) verschlossen ist, der auf dem Gehäuse (1) gelenkig angeordnet und zwischen einer aktiven Position für den Verschluß des Gehäuses und einer eingezogenen Position für das Öffnen desselben verschiebbar ist, dadurch gekennzeichnet, daß der Deckel (3) in dem Gehäuse (1) verschiebbar ist und daß die Seite des Deckels (3), die zu dem Gehäuse gerichtet ist, in Form eines Behälters ausgeführt ist, der mit einem Rand versehen ist, der einen Abstreifer (4) bildet, der derart ausgeführt ist, daß er mit der Innenwandung (5) des Gehäuses beim Verschieben des Deckels aus seiner aktiven Position in seine eingezogene Position zusammenwirkt, um die Gegenstände von dem Gehäuse (1) in den Behälter zu verlagern, damit diese in diesem auf zugreifbare Art und Weise vorhanden sind.

2. Vorrichtung nach Anspruch 1, dadurch gekennzeichnet, daß der Deckel (3) Seitenflansche (6) umfaßt, die mit Gelenkmitteln (8, 9) versehen sind, die derart ausgeführt sind, daß sie mit komplementären Mitteln (7) des Gehäuses zusammenwirken.

3. Vorrichtung nach Anspruch 1 oder 2, dadurch gekennzeichnet, daß mindestens ein unterer Abschnitt der Innenwandung des Gehäuses (1) als ein bezogen auf die Gelenkachse des Deckels (3) in diesem zentrierter Kreisbogen ausgebildet ist.
